# EUROPEAN PATENT APPLICATION

(11) **EP 4 815 381 A1**
(43) Date of publication of application: **30.09.2026**
(21) Application number: 25797725.6
(22) Date of filing: 29.04.2025
(51) Int. Cl.: H04L 25/02, H04L 1/00, H04B 17/336, G06N 3/08, H04B 17/309, G06N 3/084, G06N 3/094

(54) **ELECTRONIC DEVICE FOR SUPPORTING ONLINE TRAINING OF NEURAL NETWORK FOR WIRELESS COMMUNICATION, AND OPERATION METHOD THEREOF**

(30) Priority: 30.04.2024 KR 20240058144; 23.09.2024 KR 20240128561
(71) Applicant: Samsung Electronics Co., Ltd., Suwon-si, Gyeonggi-do 16677 (KR)
(72) Inventor: LEE, Ikbeom, Suwon-si Gyeonggi-do 16677 (KR); YANG, Hayoung, Suwon-si Gyeonggi-do 16677 (KR); HAN, Minsig, Suwon-si Gyeonggi-do 16677 (KR)
(74) Representative: Gulde & Partner
(86) International application number: PCT/KR2025/005817
(87) International publication number: WO 2025/230291

(57) **Abstract**

According to an embodiment, provided may be an electronic device comprising: a plurality of antennas; at least one processor; and a memory for storing at least one instruction. The at least one processor may be configured to receive a signal from an external electronic device through at least one of the plurality of antennas. The at least one processor may be configured to identify whether or not information associated with a characteristic of a wireless communication channel identified from the received signal satisfies a condition for identifying reliability of training data. The at least one processor may be configured to, on the basis of identifying that the information associated with the characteristic of the wireless communication channel satisfies the condition, perform online training of an artificial neural network for estimating a characteristic of a wireless communication channel corresponding to a cell, by using the information associated with the characteristic of the wireless communication channel. The at least one processor may be configured to estimate the characteristic of the wireless communication channel on the basis of information output from the online training-based artificial neural network by inputting, into the online training-based artificial neural network, a signal received through at least some of the plurality of antennas.

## Description

### [Technical Field]

The disclosure relates to an electronic device for supporting online training of a neural network for wireless communication and an operation method thereof.

### [Background Art]

Communication systems are evolving to support higher data rates, such as those of 5^{th} generation (5G) communication systems, to meet the demand for wireless data traffic. 5G communication systems are being considered to be implemented in a millimeter-wave (mmWave) band (e.g., 60 GHz band) to achieve data rates approximately 10 times higher than those of existing 4^{th} generation (4G) communication system.

Recently, interest in artificial intelligence has been increasing, and the remarkable advancements in computing power and the emergence of deep learning technologies have significantly improved the accuracy of artificial intelligence technologies. Accordingly, active research is being conducted to use artificial intelligence technologies across various fields. In wireless mobile communication systems, diverse studies on artificial neural networks are also being carried out. Artificial neural networks may perform offline training. Offline training is a method of training a neural network by using data acquired in advance or learning data from a link-level simulator. In the receiver performance of mobile communication systems, channel estimation between a base station and a terminal is one of the critical factors. To enhance the performance of channel estimation, online training based on real field data that reflects the radio environment of a cell is required.

The information described above may be provided as a related art for helping understanding of this document. None of the aforementioned content is claimed as prior art related to this document, nor is it permitted to be used to determine prior art.

### [Detailed Description of the Invention]

### [Technical Problem]

### [Technical Solution]

According to an embodiment, an electronic device may include a plurality of antennas. The electronic device may include at least one processor. The electronic device may include memory configured to store at least one instruction. The at least one processor may be configured to receive a signal from an external electronic device through at least one of the plurality of antennas. The at least one processor may be configured to identify whether information associated with a characteristic of a wireless communication channel identified from the received signal satisfies a condition for identifying reliability of training data. The at least one processor may be configured to, based on identifying that the information associated with the characteristic of the wireless communication channel satisfies the condition, perform online training of an artificial neural network for estimating a characteristic of a wireless communication channel corresponding to a cell using the information associated with the characteristic of the wireless communication channel. The at least one processor may be configured to estimate a characteristic of a wireless communication channel, based on information output from the artificial neural network based on the online training by inputting a signal received through at least a part of the plurality of antennas to the artificial neural network based on the online training.

An embodiment may provide a method of estimating a characteristic of a wireless communication channel by an electronic device. The method may include receiving a signal from an external electronic device through at least one of a plurality of antennas of the electronic device. The method may include identifying whether information associated with a characteristic of a wireless communication channel identified from the received signal satisfies a condition for identifying reliability of training data. The method may include, based on identifying that the information associated with the characteristic of the wireless communication channel satisfies the condition, performing online training of an artificial neural network for estimating a characteristic of a wireless communication channel corresponding to a cell using the information associated with the characteristic of the wireless communication channel. The method may include estimating a characteristic of a wireless communication channel, based on information output from the artificial neural network based on the online training by inputting a signal received through at least a part of the plurality of antennas to the artificial neural network based on the online training.

An embodiment may provide a storage medium storing at least one instruction readable by a computer. The at least one instruction may, when executed by at least one processor of an electronic device, cause the electronic device to perform at least one operation. The at least one operation may include receiving a signal from an external electronic device through at least one of a plurality of antennas of the electronic device. The at least one operation may include identifying whether information associated with a characteristic of a wireless communication channel identified from the received signal satisfies a condition for identifying reliability of training data. The at least one operation may include, based on identifying that the information associated with the characteristic of the wireless communication channel satisfies the condition, performing online training of an artificial neural network for estimating a characteristic of a wireless communication channel corresponding to a cell using the information associated with the characteristic of the wireless communication channel. The at least one operation may include estimating a characteristic of a wireless communication channel, based on information output from the artificial neural network based on the online training by inputting a signal received through at least a part of the plurality of antennas to the artificial neural network based on the online training.

### [Advantageous Effects]

### [Brief Description of Drawings]

FIG. 1 is a block diagram of an electronic device in a network environment according to various embodiments;
FIG. 2A is a block diagram of an electronic device for supporting legacy network communication and 5G network communication according to various embodiments;
FIG. 2B is a block diagram of an electronic device for supporting legacy network communication and 5G network communication according to various embodiments;
FIG. 3 shows a block diagram illustrating an example electronic device according to an embodiment;
FIG. 4 shows a block diagram illustrating an example electronic device according to an embodiment;
FIG. 5 shows a flowchart illustrating a method of estimating a characteristic of a wireless communication channel by an electronic device according to an embodiment;
FIG. 6 is a diagram illustrating an example slot structure of a signal received by an electronic device according to an embodiment;
FIG. 7 is a diagram illustrating a method of estimating a wireless communication channel by an electronic device according to an embodiment;
FIG. 8 is a diagram illustrating an example neural network according to an embodiment;
FIG. 9 is a diagram illustrating an example neural network according to an embodiment;
FIG. 10 is a diagram illustrating an example neural network according to an embodiment;
FIG. 11 is a diagram illustrating a training period according to an embodiment; and
FIG. 12 shows a flowchart illustrating a method of estimating a characteristic of a wireless communication channel by an electronic device according to an embodiment.

### [Mode for Carrying out the Invention]

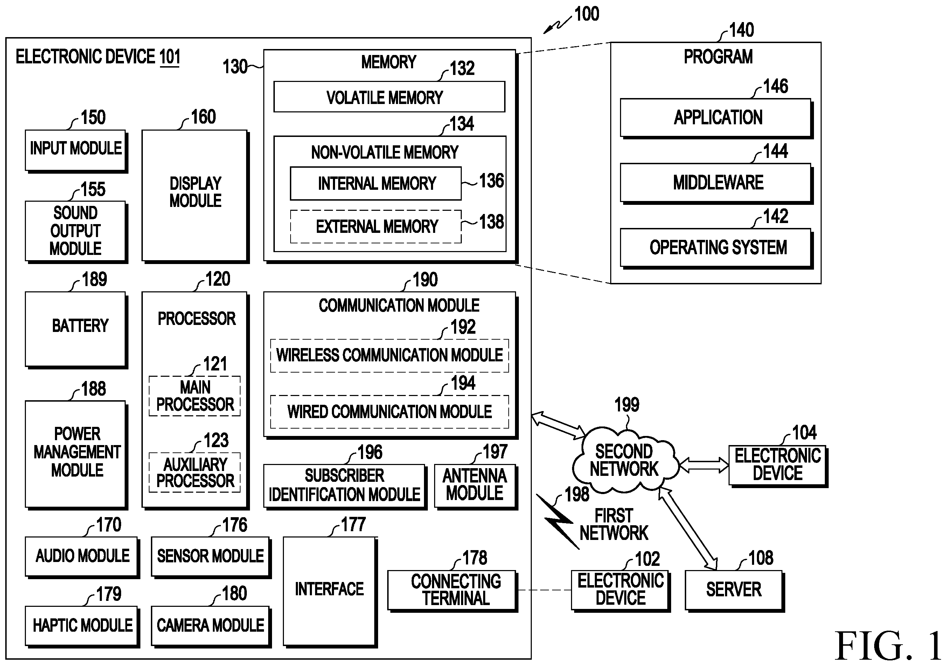

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

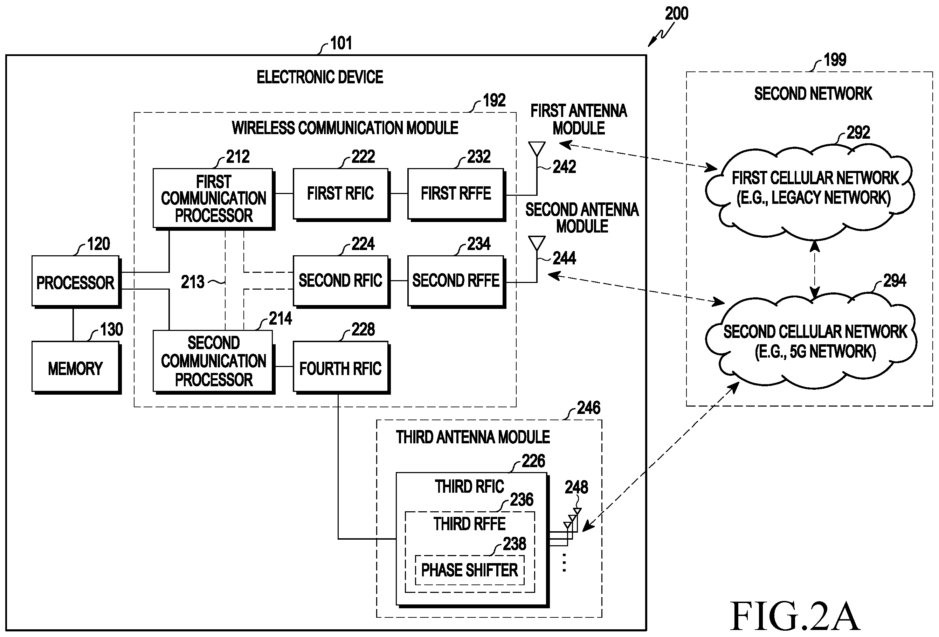

FIG. 2A is a block diagram 200 of the electronic device 101 for supporting legacy network communication and 5G network communication according to an embodiment. Referring to FIG. 2A, the electronic device 101 may include a first communication processor 212, a second communication processor 214, a first radio frequency integrated circuit (RFIC) 222, a second RFIC 224, a third RFIC 226, a fourth RFIC 228, a first radio frequency front end (RFFE) 232, a second RFFE 234, a first antenna module 242, a second antenna module 244, a third antenna module 246, and antennas 248. The electronic device 101 may further include the processor 120 and the memory 130. A second network 199 may include a first cellular network 292 and a second cellular network 294. According to another embodiment, the electronic device 101 may further include at least one component among the components illustrated in FIG. 1, and the second network 199 may further include at least another network. According to an embodiment, the first communication processor 212, the second communication processor 214, the first RFIC 222, the second RFIC 224, the fourth RFIC 228, the first RFFE 232, and the second RFFE 234 may configure at least a part of the wireless communication module 192. According to another embodiment, the fourth RFIC 228 may be omitted, or may be included as a part of the third RFIC 226.

The first communication processor 212 may establish a communication channel within a band to be used for wireless communication with the first cellular network 292, and may support legacy network communication performed through the established communication channel. According to an embodiment, the first cellular network may be a legacy network including a second generation (2G), 3G, 4G, or long-term evolution (LTE) network. The second communication processor 214 may establish a communication channel corresponding to a designated band (e.g., about 6 GHz-60 GHz) among bands to be used for wireless communication with the second cellular network 294, and may support 5G network communication performed through the established communication channel. According to an embodiment, the second cellular network 294 may be a 5G network defined in 3GPP. Additionally, according to an embodiment, the first communication processor 212 or the second communication processor 214 may establish a communication channel corresponding to another designated band (e.g., about 6 GHz or lower) among bands to be used for wireless communication with the second cellular network 294, and may support 5G network communication performed through the established communication channel.

The first communication processor 212 may transmit or receive data to or from the second communication processor 214. For example, data which has been classified to be transmitted through the second cellular network 294 may be changed to be transmitted through the first cellular network 292. In this case, the first communication processor 212 may receive transmission data from the second communication processor 214. For example, the first communication processor 212 may transmit or receive data to or from the second communication processor 214 through an interprocessor interface 213. The interprocessor interface 213 may be implemented as, for example, a universal asynchronous receiver/transmitter (UART) (e.g., a high speed-UART (HS-UART) or peripheral component interconnect bus express (PCIe) interface), but the type thereof is not limited. Alternatively, the first communication processor 212 and the second communication processor 214 may exchange control information and packet data information by using, for example, a shared memory. The first communication processor 212 may transmit or receive, to or from the second communication processor 214, various information, such as sensing information, information on output strength, and resource block (RB) allocation information.

According to implementation, the first communication processor 212 may not be directly connected to the second communication processor 214. In this case, the first communication processor 212 may transmit or receive data to or from the second communication processor 214 through the processor 120 (e.g., an application processor). For example, the first communication processor 212 and the second communication processor 214 may transmit or receive data to or from each other through the processor 120 (e.g., an application processor) and an HS-UART interface or a PCIe interface, but the type of interface is not limited. Alternatively, the first communication processor 212 and the second communication processor 214 may exchange control information and packet data information by using the processor 120 (e.g., an application processor) and a shared memory.

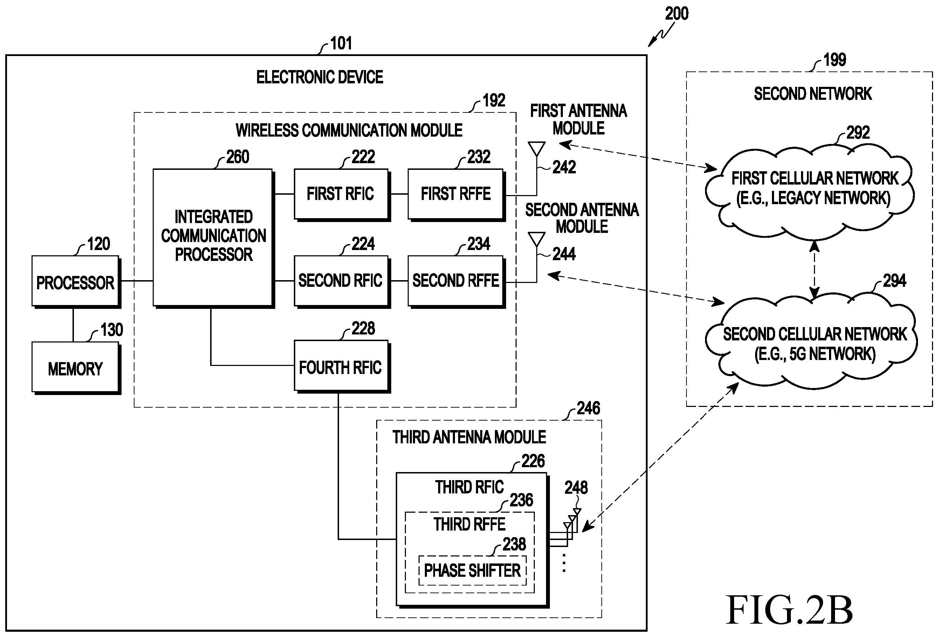

According to an embodiment, the first communication processor 212 and the second communication processor 214 may be implemented in a single chip or a single package. According to an embodiment, the first communication processor 212 or the second communication processor 214 may be configured in a single chip or a single package together with the processor 120, the auxiliary processor 123, or the communication module 190. For example, as illustrated in FIG. 2B, an integrated communication processor 260 may support both a function for communication with the first cellular network 292 and a function for communication with the second cellular network 294.

As described above, at least one of the processor 120, the first communication processor 212, the second communication processor 214, or the integrated communication processor 260 may be implemented as a single chip or a single package. In this case, a single chip or a single package may include memory (or storage means) that stores an instruction causing performing of at least some of operations performed according to various embodiments, and a processing circuit (or there is no limit to the name, such as a calculation circuit) for executing the instruction. Instructions stored in the memory may, when individually or collectively executed by at least one processor, cause the electronic device 101 to perform at least one operation.

The first RFIC 222 may convert, at the time of transmission, a baseband signal generated by the first communication processor 212 into a radio frequency (RF) signal having a frequency of about 700 MHz to about 3 GHz, which is used in the first cellular network 292 (e.g., a legacy network). At the time of reception, an RF signal may be obtained from the first network 292 (e.g., a legacy network) through an antenna (e.g., the first antenna module 242), and may be preprocessed by an RFFE (e.g., the first RFFE 232). The first RFIC 222 may convert a preprocessed RF signal into a baseband signal so as to enable the preprocessed RF signal to be processed by the first communication processor 212.

The second RFIC 224 may convert, at the time of transmission, a baseband signal generated by the first communication processor 212 or the second communication processor 214 into an RF signal (hereinafter, a 5G Sub6 RF signal) within a Sub6 band (e.g., about 6 GHz or lower) used in the second cellular network 294 (e.g., a 5G network). At the time of reception, a 5G Sub6 RF signal may be obtained from the second cellular network 294 (e.g., a 5G network) through an antenna (e.g., the second antenna module 244), and may be preprocessed via an RFFE (e.g., the second RFFE 234). The second RFIC 224 may convert a preprocessed 5G Sub6 RF signal into a baseband signal so as to enable the preprocessed 5G Sub6 RF signal to be processed by a corresponding communication processor among the first communication processor 212 or the second communication processor 214.

The third RFIC 226 may convert a baseband signal generated by the second communication processor 214 into an RF signal (hereinafter, a 5G Above6 RF signal) within a 5G Above6 band (e.g., about 6 GHz-about 60 GHz) to be used in the second cellular network 294 (e.g., a 5G network). At the time of reception, a 5G Above6 RF signal may be obtained from the second cellular network 294 (e.g., a 5G network) through an antenna (e.g., the antenna 248), and may be preprocessed via a third RFFE 236. The third RFIC 226 may convert a preprocessed 5G Above6 RF signal into a baseband signal so as to enable the preprocessed 5G Above6 RF signal to be processed by the second communication processor 214. According to an embodiment, the third RFFE 236 may be configured as a part of the third RFIC 226.

The electronic device 101 may, according to an embodiment, include the fourth RFIC 228 separately from the third RFIC 226 or as at least a part thereof. In this case, the fourth RFIC 228 may convert a baseband signal generated by the second communication processor 214 into an RF signal (hereinafter, an IF signal) within an intermediate frequency band (e.g., about 9 GHz-11 GHz), and then transfer the IF signal to the third RFIC 226. The third RFIC 226 may convert an IF signal into a 5G Above6 RF signal. At the time of reception, a 5G Above6 RF signal may be received from the second cellular network 294 (e.g., a 5G network) through an antenna (e.g., the antenna 248), and may be converted into an IF signal by the third RFIC 226. The fourth RFIC 228 may convert an IF signal into a baseband signal so as to enable the IF signal to be processed by the second communication processor 214.

According to an embodiment, the first RFIC 222 and the second RFIC 224 may be implemented as at least a part of a single chip or a single package. According to an embodiment, as illustrated in FIG. 2A or FIG. 2B, when the first RFIC 222 and the second RFIC 224 are implemented as a single chip or a single package, the first RFIC and the second RFIC may be implemented as an integrated RFIC. In this case, the integrated RFIC may be connected to the first RFFE 232 and the second RFFE 234 so as to convert a baseband signal into a signal within a band supported by the first RFFE 232 and/or the second RFFE 234, and transmit the converted signal to one of the first RFFE 232 and the second RFFE 234. According to an embodiment, the first RFFE 232 and the second RFFE 234 may be implemented as at least a part of a single chip or a single package. According to an embodiment, at least one antenna module among the first antenna module 242 or the second antenna module 244 may be omitted or combined with another antenna module so as to process RF signals within multiple corresponding bands.

According to an embodiment, the third RFIC 226 and the antenna 248 may be arranged on the same substrate so as to configure the third antenna module 246. For example, the wireless communication module 192 or the processor 120 may be disposed on a first substrate (e.g., a main PCB). In this case, the third RFIC 226 may be disposed in a partial area (e.g., a lower surface) of a second substrate (e.g., a sub PCB) separate from the first substrate, and the antenna 248 may be disposed in another partial area (e.g., an upper surface), whereby the third antenna module 246 is configured. The arrangement of the third RFIC 226 and the antenna 248 on the same substrate enables reduction of the length of a transmission line therebetween. This may reduce, for example, loss (e.g., attenuation) of, by a transmission line, a signal within a high frequency band (e.g., about 6 GHz-about 60 GHz) used in 5G network communication. Accordingly, the electronic device 101 may improve the quality or speed of communication with the second network 294 (e.g., a 5G network).

According to an embodiment, the antenna 248 may be configured as an antenna array including multiple antenna elements which are usable in beamforming. In this case, the third RFIC 226 may include, for example, as a part of the third RFFE 236, multiple phase shifters 238 corresponding to the multiple antenna elements. At the time of transmission, each of the multiple phase shifters 238 may convert the phase of a 5G Above6 RF signal to be transmitted to an outside (e.g., a base station of a 5G network) of the electronic device 101 through a corresponding antenna element. At the time of reception, each of the multiple phase shifters 238 may convert, into an identical or a substantially identical phase, the phase of a 5G Above6 RF signal which has been received from the outside through a corresponding antenna element. This enables transmission or reception between the electronic device 101 and the outside through beamforming.

The second cellular network 294 (e.g., a 5G network) may be operated independently of the first cellular network 292 (e.g., a legacy network) (e.g., stand-alone (SA)), or may be operated while being connected thereto (e.g., non-standalone (NSA)). For example, there may be only an access network (e.g., a 5G radio access network (RAN) or a next generation RAN (NG RAN)) in a 5G network without a core network (e.g., a next generation core (NGC)). In this case, the electronic device 101 may access an access network of a 5G network, and then access an external network (e.g., Internet) under the control of a core network (e.g., an evolved packed core (EPC)) of a legacy network. Protocol information (e.g., LTE protocol information) for communication with a legacy network or protocol information (e.g., new radio (NR) protocol information) for communication with a 5G network are stored in the memory 230, and may be accessed by another component (e.g., the processor 120, the first communication processor 212, or the second communication processor 214).

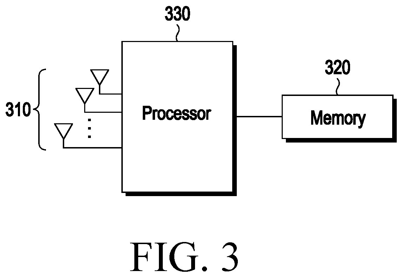

FIG. 3 shows a block diagram illustrating an example electronic device (e.g., the electronic device 101) according to an embodiment.

In an embodiment, the electronic device 101 may include a plurality of antennas 310, memory 320, and/or a processor 330.

In an embodiment, the electronic device 101 may receive a signal from an external electronic device through at least one of the plurality of antennas 310 of the electronic device 101. If the electronic device 101 is implemented as at least a part of a base station, the external electronic device may be a terminal. If the electronic device 101 is implemented as a portable electronic device (e.g., a smartphone, a wearable device, or a tablet), the external electronic device may be a base station.

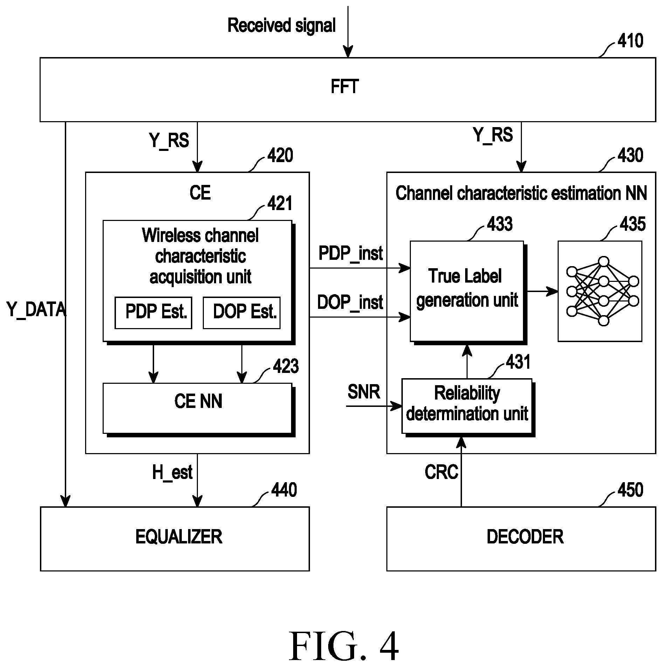

In an embodiment, the memory 320 may include an artificial neural network for estimating a characteristic of a wireless communication channel. The memory 320 may also include an artificial neural network for estimating a wireless communication channel (e.g., calculating a distribution associated with a type of a wireless communication channel or a filter coefficient of a wireless communication channel). The artificial neural network may be trained using field data obtained based on a received signal. The memory 320 may store training data for training the artificial neural network. A detailed method of obtaining training data (e.g., ground truth) for training the artificial neural network by the electronic device 101 will be described with reference to FIG. 4.

In an embodiment, the processor 330 may perform overall operations for training the artificial neural network for estimating a characteristic of a wireless communication channel. The processor 330 may include a processing circuit (not illustrated) for performing an operation described below. In the disclosure, an operation performed by a particular module (or block) may be understood as being performed by the processor 330.

FIG. 4 is a block diagram illustrating a configuration of an electronic device.

Referring to FIG. 4, in an embodiment, an electronic device (e.g., the electronic device 101) may include a fast Fourier transform (FFT) block 410, a channel estimation block 420, a neural network block 430, an equalizer 440, and a decoder 450. Each of the FFT block 410, the channel estimation block 420, the neural network block 430, the equalizer 440, and the decoder 450 may be implemented as an independent circuit or at least a part of a receiver. An operation performed by each of the FFT block 410, the channel estimation block 420, the neural network block 430, the equalizer 440, and the decoder 450 may be understood as an operation performed by a processor (e.g., the processor 330).

In an embodiment, the FFT block 410 may transform a received signal, based on FFT. The signal transformed by the FFT block 410 may be transferred to the channel estimation block 420 or the equalizer 440. For example, a signal (e.g., Y_RS) of the frequency domain transformed by the FFT block 410 may be transferred to the channel estimation block 420. For example, a data signal (e.g., Y_data) transformed by the FFT block 410 may be transferred to the equalizer 440. The FFT block 410 may, for example, transform a received signal corresponding to an n-th antenna and an i-th RS symbol into a signal of the frequency domain, based on Equation 1. A "wireless communication channel" may be an uplink channel of a signal transmitted from a terminal to a base station, and there is no limit thereto. For example, a wireless communication channel may be a downlink channel of a signal transmitted from a base station to a terminal. A signal received by an electronic device may be an RF signal defined in a new radio (NR) specification, and there is no limit thereto. For example, a received signal may be a signal defined in a long-term evolution (LTE) or 6thgeneration (6G) specification.${{Y}^{n}}_{i , k} = {{H}^{n}}_{i , k} {{x}^{n}}_{i , k} + {{W}^{n}}_{i , k}$

In an embodiment, *Hⁿ_{i,k}* may be a channel matrix of a k-th subcarrier. *xⁿ*_{*i*,*k*} may be a pilot sequence of the k-th subcarrier. *Wⁿ_{i,k}* may be an additive white Gaussian noise (AWGN) of the k-th subcarrier. Here, k may be a natural number such as 0, 1, or *N_{SC}*-1. On a reference symbol ("RS"), a pilot sequence previously defined between a base station and a terminal may be transmitted. Six pilot tones may be included in each resource block. *N_{SC}* corresponds to 6 times of an allowed resource block (Allocated_RB), and may be the number of pilot tones allocated to the reference symbol.

In an embodiment, the channel estimation block 420 may perform real-time estimation for information associated with a characteristic of a wireless communication channel in a unit of a slot. The characteristic of the wireless communication channel may include, for example, a power delay profile (PDP) or a Doppler spread (DOP), and there is no limit thereto. The characteristic of the wireless communication channel may include characteristics of a fading channel, such as time offset, frequency offset, LOS, non-line-of-sight (NLOS), and angle of arrival of a signal. Estimation of a wireless communication channel between a terminal (user equipment) and a base station may be an important factor for improving the reception performance of a mobile communication system. A PDP may represent time delay values of reflected waves and power of each reflected wave component in a fading channel environment between a terminal and a base station. A PDP may have a consistent characteristic in a unit of a cell provided by a base station. For example, various reflected waves may be received in an urban environment. In a non-urban environment, a signal of a direct wave (line-of-sight, "LOS") component may be received. A channel in the non-urban environment may be a flat fading channel having a small number of multiple paths. Estimation of a PDP may attribute the improvement of complexity and channel estimation performance in the frequency domain. For example, the electronic device 101 may, based on an estimated PDP, adaptively optimize a filter coefficient for channel estimation. The electronic device 101 may, based on identifying that a fading channel of a cell is TDL-A, configure, as a filter coefficient, a channel estimation filter coefficient corresponding to TDL-A. A Doppler spread may occur due to a relative speed of a terminal against a base station according to movement of the terminal. A Doppler spread may be a channel characteristic affecting a time-axis fading variance of a fading channel between a terminal and a base station. A Doppler spread may also have a consistent characteristic in a unit of a cell. For example, in a cell covering highway or high-speed rail surroundings, a high Doppler spread may be detected. Estimation of a Doppler spread may attribute the improvement of complexity and channel estimation performance in the time domain.

In an embodiment, the channel estimation block 420 may include a wireless channel characteristic acquisition unit 421 and a channel estimation neural network 423. The wireless channel characteristic acquisition unit 421 may output information associated with an instantaneous characteristic of a wireless communication channel. For example, the wireless channel characteristic acquisition unit 421 may output an instantaneous PDP (PDP_inst). The wireless channel characteristic acquisition unit 421 may output an instantaneous DOP (DOP_inst). The wireless channel characteristic acquisition unit 421 may output both an instantaneous PDP and an instantaneous DOP. The wireless channel characteristic acquisition unit 421 may estimate an instantaneous PDP and/or an instantaneous DOP by using a method based on an algorithm (e.g., non-AI) which is not an artificial neural network. An algorithm not employing an artificial neural network may include a signal processing technique. The wireless channel characteristic acquisition unit 421 may also estimate an instantaneous PDP and/or an instantaneous DOP by using a general neural network model based on offline training. The wireless channel characteristic acquisition unit 421 may decorrelate a pilot sequence for a received signal in the frequency domain, based on Equation 2 so as to obtain a wireless channel characteristic.${Y}^{n ′} {}_{i , k} = {Y}^{n} {}_{i , k} ⋅ {x}^{n} {{}_{i , k}}^{∗} = {H}^{n} {}_{i , k} + {W}^{n} {}_{i , k} {x}^{n} {{}_{i , k}}^{∗}$

A reference symbol decorrelated according to Equation 2 may be expressed by a vector of *N_{SC}* number of pilot tones according to Equation 3.${{Y}_{i}}^{n ′} = \left[{{Y}^{n ′}}_{i , 0},{{Y}^{n ′}}_{i , 1},{{Y}^{n ′}}_{i , 2},…,{{Y}^{n ′}}_{i , {N}_{SC} - 1}\right]$

The wireless channel characteristic acquisition unit 421 may perform inverse discrete Fourier transform (IDFT) for ***Yᵢ^{n'}*,** based on Equation 4 so as to obtain a signal of the time domain.${{y}^{n}}_{i} = IDFT \left({Y}_{i}^{n ′}\right)$

The wireless channel characteristic acquisition unit 421 may estimate an instantaneous PDP of the n-th antenna and the i-th RS symbol in a unit of a slot from a signal of the time domain, based on Equation 5.$PD {P}_{inst} = fun {c}_{pdp} \left({{y}^{n}}_{i}\right)$
***func_{µdp}*()** may be a function of calculating an instantaneous PDP, and may be implemented by a neural network based on offline training or a non-AI algorithm.

The wireless channel characteristic acquisition unit 421 may estimate an instantaneous DOP, based on Equation 6.$DO {P}_{inst} = fun {c}_{DOP} \left({{Y}_{0}}^{n ′}, {{Y}_{1}}^{n ′}\right)$

***DOPᵢₙₛₜ*** may be an instantaneous Doppler spread estimated for a particular time slot. ***func_{DOP}*()** may be a function of calculating an instantaneous Doppler spread, and may be implemented by a neural network based on offline training or a non-AI algorithm. The instantaneous PDP and the instantaneous DOP obtained by the channel characteristic acquisition unit 421 may be provided to the neural network block 430 as an input for online training. The channel estimation neural network 423 may obtain an estimated instantaneous channel value H_est, based on the decorrelated reference symbol and the instantaneous PDP and the instantaneous DOP obtained by the wireless channel characteristic acquisition unit 421. The estimated instantaneous channel value may be transferred to the equalizer 440. A channel estimation result and the data signal (Y_DATA) output by the FFT block 410 may be input to the decoder 450 via the equalizer 440. The decoder 450 may decode an input signal. Information associated with a packet decoded by the decoder 450 may be provided to the neural network block 430. The decoder 450 may provide, to the neural network block 430, for example, a cyclic redundancy check (CRC) result value of a packet decoded from a received signal.

In an embodiment, the neural network block 430 may include a reliability determination unit 431, a true label generation unit 433, and an artificial neural network 435. In order to perform online training, collection of reliable field data may be required. The reliability determination unit 431 may identify the reliability of an instantaneously estimated PDP (PDP_inst), based on a CRC result of a packet decoded from a received signal. For example, if the CRC result of the packet decoded from the received signal corresponds to a value (e.g., OK response) indicating that there is no error in the decoded packet, the reliability determination unit 431 may identify, as a ground truth, an instantaneously estimated channel characteristic (e.g., PDP_inst and/or DOP_inst) corresponding to a slot having no error. If the CRC result of the packet decoded from the received signal corresponds to a value (e.g., error response) indicating that there is an error in the decoded packet, the reliability determination unit 431 may identify a signal noise ratio (SNR) estimated in a unit of a slot. If the SNR of the received signal exceeds a threshold value, the reliability determination unit 431 may determine an instantaneously estimated channel characteristic as reliable training data even when the CRC result of the decoded packet is not OK. In an embodiment, only if the CRC result of the packet decoded from the received signal corresponds to a value indicating that there is no error in the decoded packet and the SNR of the received signal exceeds a threshold value, the reliability determination unit 431 may determine an instantaneously estimated channel characteristic as reliable training data. In an embodiment, the reliability determination unit 431 may use a long-latency response (LLR) or SNR for a channel (e.g., a sounding reference signal (SRS) or a physical random access channel (PRACH)) having no channel codec to identify the reliability of an instantaneously estimated channel characteristic. The reliability determination unit 431 may identify a CRC result together for a channel (e.g., a physical uplink shared channel (PUSCH) or a physical uplink control channel (PUCCH)) having a channel codec, to identify the reliability of an instantaneously estimated channel characteristic. The true label generation unit 433 may generate a true label, based on a result of reliability identification by the reliability determination unit 431. For example, if an instantaneously estimated channel characteristic is determined as reliable data by the reliability determination unit 431, the true label generation unit 433 may store a received signal and the instantaneously estimated channel characteristic as a true label pair. If an instantaneously estimated channel characteristic is determined as unreliable data by the reliability determination unit 431, the true label generation unit 433 may not store the instantaneously estimated channel characteristic corresponding to a slot. The true label generation unit 433 may, for example, discard an unreliable packet. The true label generation unit 433 may provide a true label pair to the artificial neural network 435. The artificial neural network 435 may perform online training, based on learning the provided true label pair. The artificial neural network 435 may perform online training for a characteristic of a received signal in a unit of a cell, thereby improving the estimation performance of a wireless channel characteristic corresponding to a cell. In an embodiment, the artificial neural network 435 may perform online training for channel estimation as well as training for a channel characteristic. For example, based on an estimation result (e.g., a filter coefficient of a wireless communication channel or a type of a wireless communication channel) of a wireless communication channel satisfying a condition for online training data, the artificial neural network 435 may store the estimation result of the wireless communication channel as a ground truth. The artificial neural network 435 may, after performing online training, estimate a characteristic of a wireless channel, based on the reference symbol of the received signal transformed by the FFT block 410. The wireless channel characteristic estimated by the artificial neural network 435 based on the online training specialized for a cell may have an improved estimation accuracy compared to the wireless channel characteristic estimated by a neural network model based on offline training or non-AI.

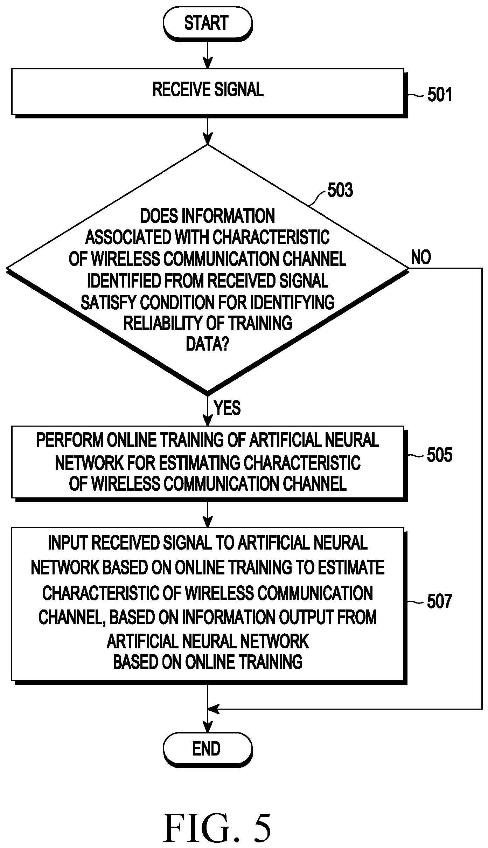

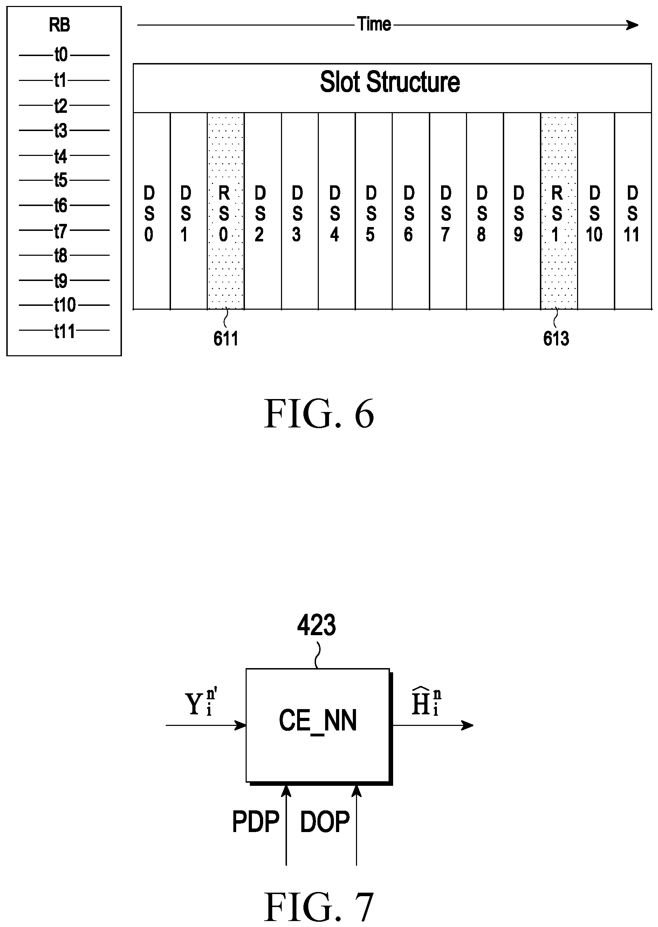

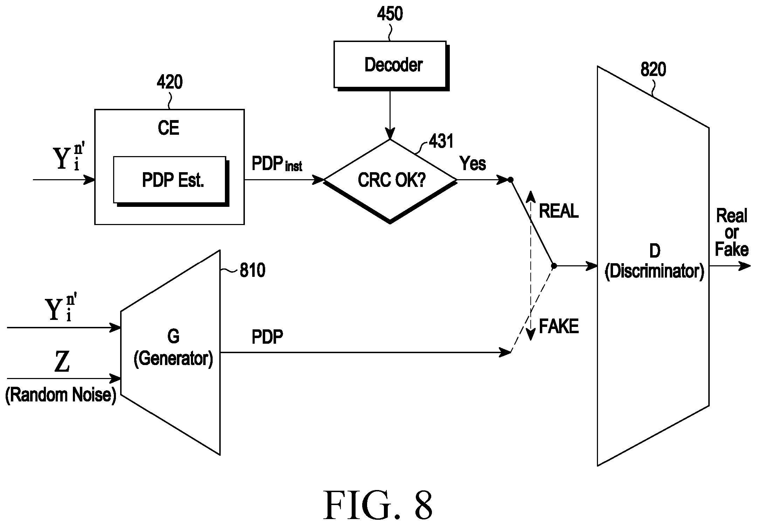

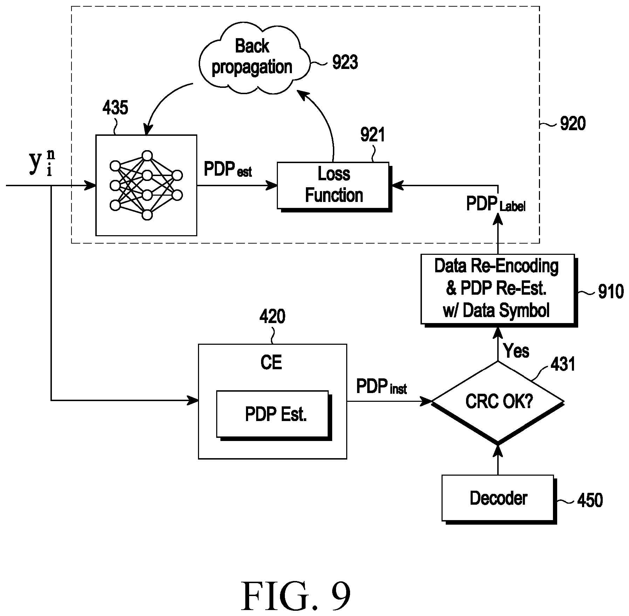

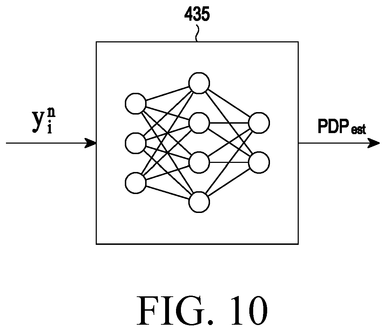

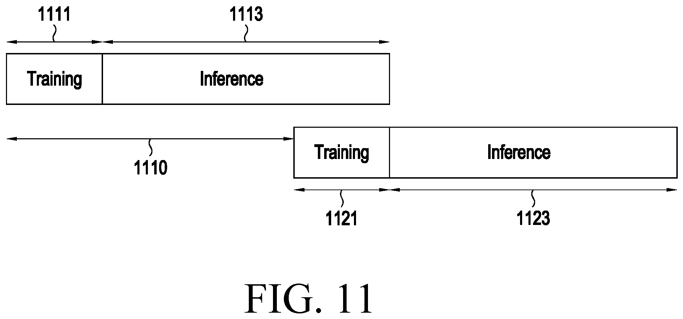

FIG. 5 is a flowchart illustrating a method of performing online training of an artificial neural network of an electronic device. An embodiment of FIG. 5 will be described with reference to FIG. 6, FIG. 7, FIG. 8, FIG. 9, FIG. 10, and FIG. 11. FIG. 6 is a diagram illustrating an example slot structure of a signal received by an electronic device according to an embodiment. FIG. 7 is a diagram illustrating a method of estimating a wireless communication channel by an electronic device according to an embodiment. FIG. 8 is a diagram illustrating an example neural network according to an embodiment. FIG. 9 is a diagram illustrating an example neural network according to an embodiment. FIG. 10 is a diagram illustrating an example neural network according to an embodiment. FIG. 11 is a diagram illustrating a training period according to an embodiment.

Referring to FIG. 5, in an embodiment, the electronic device 101 (e.g., the processor 330) may receive a signal in operation 501. The electronic device 101 may receive a signal from an external electronic device through at least one of the plurality of antennas of the electronic device 101. If the electronic device 101 is implemented as at least a part of a base station, the external electronic device may be a terminal. If the electronic device 101 is implemented as a portable electronic device (e.g., a smartphone, a wearable device, or a tablet), the external electronic device may be a base station.

In an embodiment, in operation 503, the electronic device 101 may identify whether information (or information associated with an estimation result of a wireless communication channel) associated with a characteristic of a wireless communication channel identified from the received signal satisfies a condition for identifying reliability of training data. The electronic device 101 may identify information associated with a characteristic of a wireless communication channel in a unit of a slot, based on the received signal. The electronic device 101 may estimate a wireless communication channel itself such as a distribution corresponding to a type of the wireless communication channel or a filter coefficient of the wireless communication channel. Referring to FIG. 6, on reference symbols 611 and 613, a pilot sequence previously defined between a base station and a terminal may be transmitted. The number of pilot tones corresponding to a resource block may be, for example, 6, and there is no specific limit to the number of pilot tones.

In an embodiment, the information associated with a characteristic of a wireless communication channel may include, for example, an instantaneous PDP and an instantaneous Doppler spread, and an example of a characteristic of a wireless communication channel is not limited thereto. The electronic device 101 may input the received signal to an artificial neural network of which the online training is not performed, to obtain an instantaneous PDP and an instantaneous Doppler spread, based on information output from the artificial neural network of which the online training is not performed. The artificial neural network of which the online training is not performed may be an offline training-based neural network. The electronic device 101 may also obtain an instantaneous PDP and an instantaneous Doppler spread, based on signal processing based on non-AI. The electronic device 101 may, in order to identify whether data collected in real time is data reliable enough to be used for online training, identify whether information associated with a characteristic of a wireless communication channel satisfies a condition for identifying reliability of training data. Referring to FIG. 7, the electronic device 101 (e.g., the channel estimation neural network 423) may obtain an estimated instantaneous channel value ( ${\hat{H}}_{i}^{n}$) corresponding to an instantaneous PDP and an instantaneous DOP, based on a decorrelated reference symbol ( ${Y}_{i}^{n ′}$).

In an embodiment, the condition for identifying reliability of training data may include a condition that a CRC result for a packet decoded from the received signal corresponds to a value indicating that there is no error in the decoded packet. The electronic device 101 may identify whether a CRC result for a decoded packet corresponds to a value indicating that there is no error in the decoded packet. The electronic device 101 may, based on identifying that a CRC result corresponds to a value indicating that there is no error in a decoded packet, identify that an instantaneous PDP and an instantaneous Doppler spread corresponding to a slot is reliable data as training data for online training.

In an embodiment, the condition for identifying reliability of training data may include a condition that a CRC result for a packet decoded from the received signal corresponds to a value indicating that there is an error in the decoded packet and an SNR of the received signal exceeds a threshold value. The electronic device 101 may, based on identifying that a CRC result does not correspond to a value indicating that there is no error in a decoded packet, identify whether an SNR of the received signal exceeds a threshold value. The electronic device 101 may, based on identifying that an SNR of the received signal exceeds the threshold value, identify that an instantaneous PDP and an instantaneous Doppler spread corresponding to a slot is reliable data as training data for online training.

In an embodiment, the condition for identifying reliability of training data may include a condition that a CRC result for a packet decoded from the received signal corresponds to a value indicating that there is no error in the decoded packet and an SNR of the received signal exceeds a threshold value. The electronic device 101 may, based on identifying that a CRC result for a decoded packet corresponds to a value indicating that there is no error in the decoded packet and an SNR of the received signal exceeds a threshold value, identify that an instantaneous PDP and an instantaneous Doppler spread corresponding to a slot is reliable data as training data for online training.

In an embodiment, based on identifying that the information associated with the characteristic of the wireless communication channel identified from the received signal satisfies the condition for identifying reliability of training data (operation 503-Yes), the electronic device 101 may, in operation 505, perform online training of an artificial neural network for estimating a characteristic of a wireless communication channel. The electronic device 101 may, based on providing training data determined as a true label to an artificial neural network as an input, perform online training of the artificial neural network. In an embodiment, the electronic device 101 may, based on identifying that information associated with an estimation result of a wireless communication channel satisfies a condition, determine the information associated with the estimation result of the wireless communication channel as a ground truth of training data for training an artificial neural network. The electronic device 101 may, based on identifying that information associated with a characteristic of a wireless communication channel satisfies a condition, determine the information associated with the characteristic of the wireless communication channel as a ground truth of training data for training an artificial neural network. The electronic device 101 may identify the reliability of field data collected in real time to provide training data for effectively performing online training to an artificial neural network.

Referring to FIG. 8, in an embodiment, an artificial neural network may be implemented as a generative neural network. The artificial neural network may include, for example, an architecture of a generative adversarial network ("GAN"). The artificial neural network may include, for example, a generator 810 and a discriminator 820.

In an embodiment, information (or information associated with a channel estimation result) associated with a channel characteristic, which is input as a real ground truth, may be input to the discriminator 820. The electronic device 101 may, based on information associated with a packet decoded by the decoder 450 and information associated with a characteristic of a wireless communication channel estimated in real time by the channel estimation block 420, perform identification 431 of whether a CRC result corresponds to a value (e.g., OK response) indicating that there is no error in the decoded packet. The information associated with a characteristic of a wireless communication channel estimated in real time may include an instantaneous PDP, but there is no limit thereto. For example, the information associated with a characteristic of a wireless communication channel estimated in real time may also include an instantaneous Doppler spread. The information associated with a characteristic of a wireless communication channel estimated in real time may also include both an instantaneous PDP and an instantaneous Doppler spread. The information associated with a characteristic of a wireless communication channel may also include at least one of various parameters indicating a characteristic of a fading channel. The electronic device 101 may, based on identifying that there is no error in a decoded packet, provide information associated with a channel characteristic to the discriminator 820. The discriminator 820 may discriminate a channel characteristic (or channel estimation result) input as a real ground truth from a channel characteristic generated by the generator, so as to be trained to determine the channel characteristic input as a ground truth as real data, and determine the channel characteristic generated by the generator 810 as fake data. The generator 810 may generate a channel characteristic similar to a channel characteristic input as a ground truth so that the discriminator 820 determines the channel characteristic generated by the generator 810 as real data. The artificial neural network may be implemented as a neural network that learns a probability distribution of learning data, as well as a generative adversarial network. The artificial neural network may also include, for example, an architecture such as a variational autoencoder or diffusion model.

Referring to FIG. 9, in an embodiment, the artificial neural network 435 may be implemented as at least a part of an analytic neural network 920.

In an embodiment, information (or information associated with a channel estimation result) associated with a channel characteristic input as a real ground truth may be input to the analytic neural network 920. The electronic device 101 may, based on information associated with a packet decoded by the decoder 450 and information associated with a characteristic of a wireless communication channel estimated in real time by the channel estimation block 420, perform identification of whether a CRC result corresponds to a value (e.g., OK response) indicating that there is no error in the decoded packet. The electronic device 101 may, based on identifying that there is no error in a decoded packet, provide information associated with a channel characteristic to the analytic neural network 920 as a true label. The electronic device 101 may, based on a CRC result having no error and an SNR exceeding a threshold SNR, provide information associated with a channel characteristic to the analytic neural network 920 as a true label. The analytic neural network 920 may use, as a true label, a result of re-estimating a channel characteristic, based on data by a re-estimation block 910. The analytic neural network 920 may calculate a loss function 921, based on comparing a channel estimation result (e.g., PDP) with a true label. A channel estimation result may include information associated with a characteristic, such as a Doppler spread. The analytic neural network 920 may perform back propagation 923, based on the loss function 921.

Referring to FIG. 10, in an embodiment, the artificial neural network 435 for online training in a unit of a cell may perform online training for two or three cases distinguished according to an SNR.

In an embodiment, the electronic device 101 may, if the SNR exceeds a first threshold value, identify that the electronic device 101 is positioned in a strong electric field. A neural network for a strong electric field may be trained online for a slot identified as having no CRC result error, based on the SNR exceeding the first threshold value.

In an embodiment, the electronic device 101 may, if the SNR exceeds a second threshold value smaller than the first threshold value, identify that the electronic device 101 is positioned in a moderate electric field. A neural network for a moderate electric field may be trained online for a slot identified as having no CRC result error, based on the SNR exceeding the second threshold value and being smaller than the first threshold value.

In an embodiment, the electronic device 101 may, if the SNR is smaller than the second threshold value, identify that the electronic device 101 is positioned in a weak electric field. A neural network for a weak electric field may be trained online for a slot identified as having no CRC result error, based on the SNR being smaller than the second threshold value.

In an embodiment, in operation 507, the electronic device 101 may input a received signal to the artificial neural network based on the online training to estimate a characteristic of a wireless communication channel, based on information output from the artificial neural network based on the online training. The electronic device 101 may, based on online training of the neural network being completed, update the neural network by using a cell-specific parameter or a terminal (UE)-specific parameter. A cell-specific neural network may be updated using an online-trained parameter so as to provide channel characteristic estimation performance exhibiting a higher accuracy compared to a channel characteristic estimated by an offline training-based neural network or a non-AI-based signal processing method.

In an embodiment, the electronic device 101 may, based on estimating a channel characteristic by using a neural network trained online, identify whether a condition for updating parameters of the artificial neural network is satisfied. The condition for updating the parameters of the artificial neural network may include a condition that a quality of a received signal is lower than a threshold value. The quality of a received signal may be a CRC result and/or an SNR. The electronic device 101 may, for example, while estimating a channel characteristic by using a neural network trained online, based on identifying packets in which the occurrence of a CRC result error is identified, identify that a condition for updating parameters of the artificial neural network is satisfied. The electronic device 101 may, while estimating a channel characteristic by using a neural network trained online, based on identifying that an SNR is smaller than a threshold value for determining whether to perform fine tuning, identify that a condition for updating parameters of the artificial neural network is satisfied. The electronic device 101 may, based on identifying that a neural network retraining condition (parameter retrain condition, "PRC") is satisfied, update parameters to perform fine tuning of an artificial neural network.

Referring to FIG. 11, in an embodiment, the electronic device 101 (e.g., a portable electronic device transmitting or receiving a signal to or from a base station) may perform fine tuning of an artificial neural network, based on a period 1110 for updating parameters of the artificial neural network. The electronic device 101 may perform online training in a unit of a UE for the artificial neural network. The electronic device 101 may, for at least a partial time interval 1111 of the period 1110 for updating the parameters of the artificial neural network, perform online training of the artificial neural network for estimating a characteristic of a downlink channel. The electronic device 101 may estimate a characteristic of a wireless communication channel by using the artificial neural network for a time interval 1113 after performing the online training of the artificial neural network. The electronic device 101 may, based on passage of the period 1110 for updating the parameters of the artificial neural network, for at least partial time interval 1121 of a next period, perform online training of the artificial neural network for estimating a characteristic of a downlink channel. For the time interval 1121 for which the online training of the artificial neural network is performed, the electronic device 101 may stop an operation of estimating a characteristic of a wireless communication channel by using the artificial neural network. The electronic device 101 may estimate a characteristic of a wireless communication channel by using the artificial neural network for a time interval 1123 after performing the online training of the artificial neural network. The electronic device 101 may, based on the electronic device 101 being movable between different cells, periodically update parameters of the artificial neural network. The period 1111 for updating the parameters of the artificial neural network may be configured corresponding to information associated with the movement speed of the electronic device 101. For example, the greater the movement speed of the electronic device 101, the electronic device 101 may configure the training period 1111 of the artificial neural network to be short. For example, the smaller the movement speed of the electronic device 101, the electronic device 101 may configure the training period 1111 of the artificial neural network to be long.

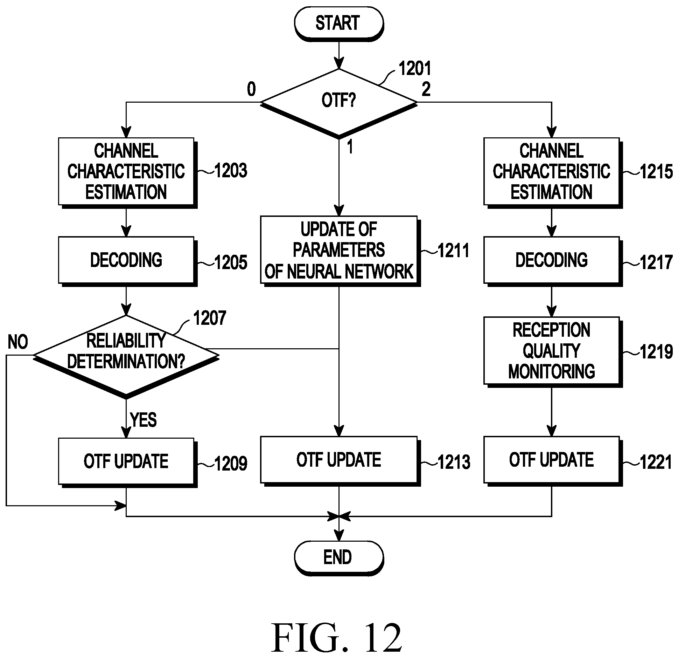

FIG. 12 shows a flowchart illustrating a method of estimating a characteristic of a wireless communication channel by an electronic device according to an embodiment.

Referring to FIG. 12, in an embodiment, the electronic device 101 (e.g., the processor 330) may perform online training of an artificial neural network.

In an embodiment, in operation 1201, an online training flag (OTF) corresponding to the artificial neural network may be identified. The OTF corresponding to the artificial neural network may include, for example, 0, 1, and 2, and there is no limit to a specific example of the OTF corresponding to the artificial neural network. If the OTF corresponding to the artificial neural network is 0, a characteristic of a wireless communication channel may be estimated by a general artificial neural network of which the online training is not performed. If the OTF corresponding to the artificial neural network is 0, a characteristic of a wireless communication channel may also be estimated based on a non-AI algorithm. If the OTF corresponding to the artificial neural network is 1, the artificial neural network may perform online training. If the OTF corresponding to the artificial neural network is 2, the artificial neural network based on online training may estimate a characteristic of a wireless communication channel.

In an embodiment, based on identifying that the OTF corresponding to the artificial neural network is 0, in operation 1203, the electronic device 101 may estimate a characteristic of a wireless communication channel. The electronic device 101 may estimate a characteristic of a wireless communication channel by using, for example, a general artificial neural network of which the online training is not performed. The electronic device 101 may also estimate a characteristic of a wireless communication channel, based on a non-AI algorithm.

In an embodiment, in operation 1205, the electronic device 101 may perform decoding, based on a signal received through at least a part of the plurality of antennas. The electronic device 101 may obtain a decoded packet, based on the received signal through an equalizer and a decoder.

In an embodiment, in operation 1207, the electronic device 101 may identify whether the decoded packet satisfies a condition for determining reliability. The electronic device 101 may identify whether, for example, a CRC result for the decoded packet corresponds to a value indicating that there is no error in the decoded packet. The electronic device 101 may also identify whether an SNR of the received signal exceeds a threshold SNR.

In an embodiment, based on identifying that the decoded packet satisfies the condition for determining reliability (operation 1207-Yes), in operation 1209, the electronic device 101 may update the OTF corresponding to the artificial neural network. The electronic device 101 may, based on identifying that the decoded packet satisfies the condition for determining reliability, identify that a channel characteristic estimated to correspond to a corresponding slot is usable for online training. The electronic device 101 may update, for example, the OTF corresponding to the artificial neural network from 0 to 1.

In an embodiment, based on identifying that the OTF corresponding to the artificial neural network is 1, in operation 1211, the electronic device 101 may update parameters of the artificial neural network. The electronic device 101 may perform online training of the artificial neural network, based on channel characteristic estimation values determined as having reliability. Based on the online training being completed, the electronic device 101 may update the artificial neural network by using a parameter trained specifically to a cell or terminal.

In an embodiment, based on the parameters of the artificial neural network being updated, in operation 1213, the electronic device 101 may update the OTF. The electronic device 101 may update, for example, the OTF corresponding to the artificial neural network from 1 to 2.

In an embodiment, based on identifying that the OTF corresponding to the artificial neural network is 2, in operation 1215, the electronic device 101 may estimate a characteristic of a wireless communication channel. In an embodiment, in operation 1217, the electronic device 101 may perform decoding, based on a signal received through at least a part of the plurality of antennas.

In an embodiment, in operation 1219, the electronic device 101 may monitor a quality of the received signal. The electronic device 101 may identify whether a quality of the received signal satisfies a condition (or retraining condition (parameter retrain condition), "PRC") for performing fine tuning of the artificial neural network. In an embodiment, in operation 1221, the electronic device 101 may update the OTF. The electronic device 101 may, based on identifying that a quality of the received signal is lower than a threshold quality, update the OTF from 2 to 0.

According to an embodiment, an electronic device may include a plurality of antennas. The electronic device may include at least one processor. The electronic device may include memory configured to store at least one instruction. The at least one processor may be configured to receive a signal from an external electronic device through at least one of the plurality of antennas. The at least one processor may be configured to identify whether information associated with a characteristic of a wireless communication channel identified from the received signal satisfies a condition for identifying reliability of training data. The at least one processor may be configured to, based on identifying that the information associated with the characteristic of the wireless communication channel satisfies the condition, perform online training of an artificial neural network for estimating a characteristic of a wireless communication channel corresponding to a cell using the information associated with the characteristic of the wireless communication channel. The at least one processor may be configured to estimate a characteristic of a wireless communication channel, based on information output from the artificial neural network based on the online training by inputting a signal received through at least a part of the plurality of antennas to the artificial neural network based on the online training.

In an embodiment, the information associated with the characteristic of the wireless communication channel may include an instantaneous power delay profile (PDP) and an instantaneous Doppler spread.

In an embodiment, the at least one processor may be further configured to obtain the instantaneous PDP and the instantaneous Doppler spread, based on information output from the artificial neural network of which the online training is not performed, by inputting the received signal to the artificial neural network of which the online training is not performed.

In an embodiment, the condition for identifying reliability of training data may include a condition that a cyclic redundancy check (CRC) result for a packet decoded from the received signal corresponds to a value indicating that there is no error in the decoded packet.

In an embodiment, the condition for identifying reliability of training data may include a condition that a CRC result for a packet decoded from the received signal corresponds to a value indicating that there is an error in the decoded packet and a signal noise ratio (SNR) of the received signal exceeds a threshold value.

In an embodiment, the condition for identifying reliability of training data may include a condition that a CRC result for a packet decoded from the received signal corresponds to a value indicating that there is no error in the decoded packet and an SNR of the received signal exceeds a threshold value.

In an embodiment, the at least one processor may be further configured to, based on identifying that information associated with an estimation result of the wireless communication channel satisfies the condition, determine the information associated with the estimation result of the wireless communication channel as a ground truth of training data for training the artificial neural network.

In an embodiment, the at least one processor may be further configured to identify whether a condition for updating parameters of the artificial neural network is satisfied. The at least one processor may be further configured to, based on identifying that the condition is satisfied, perform fine tuning of the artificial neural network by updating the parameters.

In an embodiment, the condition for updating the parameters of the artificial neural network may include a condition that a quality of the received signal is lower than a threshold value.

In an embodiment, the at least one processor may be further configured to, perform fine tuning of the artificial neural network based on a period for updating parameters of the artificial neural network.

In an embodiment, the period for updating the parameters of the artificial neural network may be configured corresponding to information associated with a movement speed of the electronic device.

An embodiment may provide a method of estimating a characteristic of a wireless communication channel by an electronic device. The method may include receiving a signal from an external electronic device through at least one of a plurality of antennas of the electronic device. The method may include identifying whether information associated with a characteristic of a wireless communication channel identified from the received signal satisfies a condition for identifying reliability of training data. The method may include, based on identifying that the information associated with the characteristic of the wireless communication channel satisfies the condition, performing online training of an artificial neural network for estimating a characteristic of a wireless communication channel corresponding to a cell using the information associated with the characteristic of the wireless communication channel. The method may include estimating a characteristic of a wireless communication channel, based on information output from the artificial neural network based on the online training by inputting a signal received through at least a part of the plurality of antennas to the artificial neural network based on the online training.

In an embodiment, the method may further include obtaining the instantaneous PDP and the instantaneous Doppler spread, based on information output from the artificial neural network of which the online training is not performed by inputting the received signal to an artificial neural network of which the online training is not performed.

In an embodiment, the method may further include, based on identifying that information associated with an estimation result of the wireless communication channel satisfies the condition, determining the information associated with the estimation result of the wireless communication channel as a ground truth of training data for training the artificial neural network.

In an embodiment, the method may further include identifying whether a condition for updating parameters of the artificial neural network is satisfied. The method may further include, based on identifying that the condition is satisfied, performing fine tuning of the artificial neural network by updating the parameters.

In an embodiment, the method may further include, performing fine tuning of the artificial neural network based on a period for updating parameters of the artificial neural network,.

An embodiment may provide a storage medium storing at least one instruction readable by a computer. The at least one instruction may, when executed by at least one processor of an electronic device, cause the electronic device to perform at least one operation. The at least one operation may include receiving a signal from an external electronic device through at least one of a plurality of antennas of the electronic device. The at least one operation may include identifying whether information associated with a characteristic of a wireless communication channel identified from the received signal satisfies a condition for identifying reliability of training data. The at least one operation may include, based on identifying that the information associated with the characteristic of the wireless communication channel satisfies the condition, performing online training of an artificial neural network for estimating a characteristic of a wireless communication channel corresponding to a cell using the information associated with the characteristic of the wireless communication channel. The at least one operation may include estimating a characteristic of a wireless communication channel, based on information output from the artificial neural network based on the online training by inputting a signal received through at least a part of the plurality of antennas to the artificial neural network based on the online training.

## Claims

1. An electronic device comprising:
a plurality of antennas;
memory; and
at least one processor,
wherein the at least one processor is configured to:
receive a signal from an external electronic device through at least one of the plurality of antennas;
identify whether information associated with a characteristic of a wireless communication channel identified from the received signal satisfies a condition for identifying reliability of training data;
based on identifying that the information associated with the characteristic of the wireless communication channel satisfies the condition, perform online training of an artificial neural network for estimating a characteristic of a wireless communication channel corresponding to a cell using the information associated with the characteristic of the wireless communication channel; and
estimate a characteristic of a wireless communication channel, based on information output from the artificial neural network based on the online training by inputting a signal received through at least a part of the plurality of antennas to the artificial neural network based on the online training.

2. The electronic device of claim 1, wherein the information associated with the characteristic of the wireless communication channel comprises an instantaneous power delay profile (PDP) and an instantaneous Doppler spread, and
wherein the at least one processor is further configured to obtain the instantaneous PDP and the instantaneous Doppler spread, based on information output from an artificial neural network of which the online training is not performed, by inputting the received signal to the artificial neural network of which the online training is not performed.

3. The electronic device of claim 1, wherein the condition for identifying reliability of training data comprises a condition that a cyclic redundancy check (CRC) result for a packet decoded from the received signal corresponds to a value indicating that there is no error in the decoded packet.

4. The electronic device of claim 1, wherein the condition for identifying reliability of training data comprises a condition that a CRC result for a packet decoded from the received signal corresponds to a value indicating that there is an error in the decoded packet and a signal noise ratio (SNR) of the received signal exceeds a threshold value.

5. The electronic device of claim 1, wherein the condition for identifying reliability of training data comprises a condition that a CRC result for a packet decoded from the received signal corresponds to a value indicating that there is no error in the decoded packet and an SNR of the received signal exceeds a threshold value.

6. The electronic device of claim 1, wherein the at least one processor is further configured to, based on identifying that information associated with an estimation result of the wireless communication channel satisfies the condition, determine the information associated with the estimation result of the wireless communication channel as a ground truth of training data for training the artificial neural network.

7. The electronic device of claim 1, wherein the at least one processor is further configured to:
identify whether a condition for updating parameters of the artificial neural network is satisfied; and
based on identifying that the condition is satisfied, perform fine tuning of the artificial neural network by updating the parameters.

8. The electronic device of claim 7, wherein the condition for updating the parameters of the artificial neural network comprises a condition that a quality of the received signal is lower than a threshold value.

9. The electronic device of claim 1, wherein the at least one processor is further configured to, perform fine tuning of the artificial neural network based on a period for updating parameters of the artificial neural network.

10. The electronic device of claim 9, wherein the period for updating the parameters of the artificial neural network is configured corresponding to information associated with a movement speed of the electronic device.

11. A method of estimating a characteristic of a wireless communication channel by an electronic device, the method comprising:
receiving a signal from an external electronic device through at least one of a plurality of antennas of the electronic device;
identifying whether information associated with a characteristic of a wireless communication channel identified from the received signal satisfies a condition for identifying reliability of training data;
based on identifying that the information associated with the characteristic of the wireless communication channel satisfies the condition, performing online training of an artificial neural network for estimating a characteristic of a wireless communication channel corresponding to a cell using the information associated with the characteristic of the wireless communication channel; and
estimating a characteristic of a wireless communication channel, based on information output from the artificial neural network based on the online training by inputting a signal received through at least a part of the plurality of antennas to the artificial neural network based on the online training to.

12. The method of claim 11, wherein the information associated with the characteristic of the wireless communication channel comprises an instantaneous PDP and an instantaneous Doppler spread, and
wherein the method further comprises obtaining the instantaneous PDP and the instantaneous Doppler spread, based on information output from the artificial neural network of which the online training is not performed, by inputting the received signal to the artificial neural network of which the online training is not performed.

13. The method of claim 11, wherein the condition for identifying reliability of training data comprises a condition that a CRC result for a packet decoded from the received signal corresponds to a value indicating that there is no error in the decoded packet.

14. The method of claim 11, wherein the condition for identifying reliability of training data comprises a condition that a CRC result for a packet decoded from the received signal corresponds to a value indicating that there is an error in the decoded packet and an SNR of the received signal exceeds a threshold value.

15. A storage medium storing at least one instruction readable by a computer, wherein the at least one instruction, when executed by at least one processor of an electronic device, causes the electronic device to perform at least one operation, and
wherein the at least one operation comprises:
receiving a signal from an external electronic device through at least one of a plurality of antennas of the electronic device;
identifying whether information associated with a characteristic of a wireless communication channel identified from the received signal satisfies a condition for identifying reliability of training data;
based on identifying that the information associated with the characteristic of the wireless communication channel satisfies the condition, performing online training of an artificial neural network for estimating a characteristic of a wireless communication channel corresponding to a cell using the information associated with the characteristic of the wireless communication channel; and
estimating a characteristic of a wireless communication channel, based on information output from the artificial neural network based on the online training by inputting a signal received through at least a part of the plurality of antennas to the artificial neural network based on the online training.
